# EUROPEAN PATENT SPECIFICATION

(11) **EP 3 995 939 B1**
(45) Date of publication and mention of the grant of the patent: **01.07.2026**
(21) Application number: 21176953.4
(22) Date of filing: 31.05.2021
(51) Int. Cl.: G06F 3/041, G06F 3/0488, H04M 1/724

(54) **METHOD AND DEVICE FOR TOUCH OPERATION, AND STORAGE MEDIUM**
VERFAHREN UND VORRICHTUNG ZUR BERÜHRUNGSOPERATION UND SPEICHERMEDIUM
PROCÉDÉ ET DISPOSITIF DE COMMANDE TACTILE ET SUPPORT D'ENREGISTREMENT

(30) Priority: 06.11.2020 CN 202011233654
(43) Date of publication of application: 11.05.2022
(73) Proprietor: Beijing Xiaomi Mobile Software Co., Ltd., Beijing 100085 (CN)
(72) Inventor: PENG, Cong, Beijing, 100085 (CN)
(74) Representative: dompatent

(56) References cited:
- EP-A1- 3 862 855
- EP-A2- 3 109 727
- CN-A- 106 980 409
- CN-A- 111 309 179

## Description

### TECHNICAL FIELD

The disclosure relates to the technical field of displays, and more particularly, to a method and device for touch operation, and a storage medium. EP3109727 discloses a system for false touch protection, where based on determination of a palm touched area, the mobile terminal configures a partial region including the palm touched area as the anti-false-touch region, which is then configured irresponsive to received signals of palm touch.

### BACKGROUND

With the development of display screen technology, curved screens are applied more and more in mobile phones for being able to extend the display content and greatly improve the feeling of holding the mobile phone.

### SUMMARY

The disclosure provides a method and a device for touch operation, and a storage medium.

The present invention is defined in the independent claims, and the preferable features according to the present invention are defined in the depending claims.

The technical solutions provided in the embodiments of the disclosure may include the following beneficial effects.

According to the method for touch operation provided by the embodiments of the disclosure, after a first area to be shielded on a touch screen of an electronic device is acquired, a touch control in a first area is moved to a second area that is not shielded when it is determined that there is a touch control in the first area in a currently displayed picture. In this way, the touch control in the shielded first area is moved to the unshielded second area, and therefore, the touch control remains in use without becoming invalid. Moreover, the above method of moving the touch control provides a solution for inconvenient touch of some touch controls due to their positions, such that the user experience of using the electronic device is improved.

It is to be understood that the forgoing general description and the following detailed description are merely exemplary and explanatory and not intended to limit the disclosure.

### BRIEF DESCRIPTION OF THE DRAWINGS

The accompanying drawings are incorporated in and constitute a part of this specification, illustrate the embodiments consistent with the disclosure and, serve to explain the principles of the disclosure together with the specification.
FIG. 1 is a first flowchart showing a method for touch operation according to an exemplary embodiment.
FIG. 2 is a schematic diagram showing a position of a first area according to an exemplary embodiment.
FIG. 3A is a schematic diagram showing a position of a second area adjacent to the first area.
FIG. 3B is a schematic diagram showing a position of a second area opposite to the first area.
FIG. 4 is a second flowchart showing a method for touch operation according to an exemplary embodiment.
FIG. 5 is a structural diagram showing a device for touch operation according to an exemplary embodiment.
FIG. 6 is a block diagram showing a device for touch operation according to an exemplary embodiment not covered by the claimed invention.

### DETAILED DESCRIPTION

Reference are made in detail to exemplary embodiments examples of which are illustrated in the accompanying drawings. In the following description related to the accompanying drawings, the same numbers in different drawings represent the same or similar elements unless otherwise stated. The implementations described in the following exemplary embodiments do not represent all the implementations consistent with the disclosure. Instead, they are merely examples of devices and methods consistent with some aspects of the disclosure as recited in the appended claims.

Terms used in the present disclosure are merely for describing specific examples and are not intended to limit the present disclosure. The singular forms "one", "the", and "this" used in the present disclosure and the appended claims are also intended to include a multiple form, unless other meanings are clearly represented in the context. It should also be understood that the term "and/or" used in the present disclosure refers to any or all of possible combinations including one or more associated listed items.

Reference throughout this specification to "one embodiment," "an embodiment," "an example," "some embodiments," "some examples," or similar language means that a particular feature, structure, or characteristic described is included in at least one embodiment or example. Features, structures, elements, or characteristics described in connection with one or some embodiments are also applicable to other embodiments, unless expressly specified otherwise.

It should be understood that although terms "first", "second", "third", and the like are used in the present disclosure to describe various information, the information is not limited to the terms. These terms are merely used to differentiate information of a same type. For example, without departing from the scope of the present disclosure, first information is also referred to as second information, and similarly the second information is also referred to as the first information. Depending on the context, for example, the term "if" used herein may be explained as "when" or "while", or "in response to ..., it is determined that".

The terms "module," "sub-module," "circuit," "sub-circuit," "circuitry," "subcircuitry," "unit," or "sub-unit" may include memory (shared, dedicated, or group) that stores code or instructions that can be executed by one or more processors. A module may include one or more circuits with or without stored code or instructions. The module or circuit may include one or more components that are directly or indirectly connected. These components may or may not be physically attached to, or located adjacent to, one another.

A unit or module may be implemented purely by software, purely by hardware, or by a combination of hardware and software. In a pure software implementation, for example, the unit or module may include functionally related code blocks or software components, that are directly or indirectly linked together, so as to perform a particular function.

With development of display screen technology, curved screens are applied more and more in mobile phones for being able to extend the display content and greatly improve the feeling of holding the mobile phone. However, due to these properties of the curved screen, part of the screen area may become unfavorable for the user to touch when the user holds the mobile phone with one hand. For example, there is often a misplaced touch. The current solution is to shield the area, which, however, would cause the control in the area to be invalid and unusable.

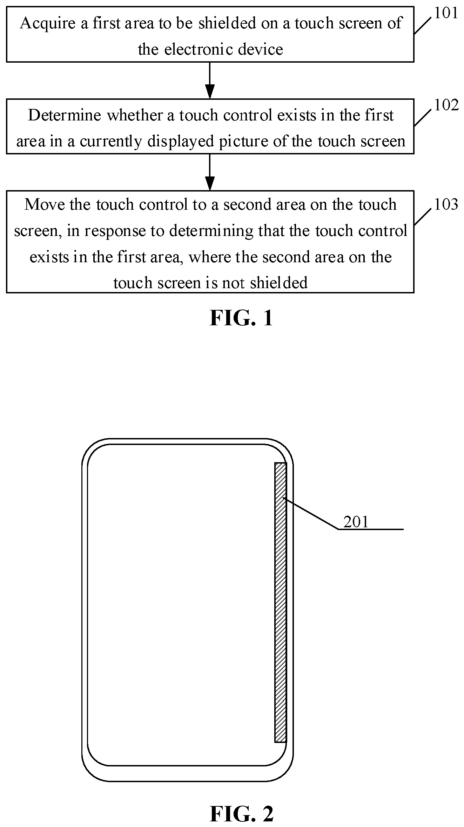

The embodiments of the disclosure provide a method for touch operation. FIG. 1 is a first flowchart showing a method for touch operation according to an exemplary embodiment. As shown in FIG. 1, the method for touch operation includes steps 101 to 103.

In step 101, a first area to be shielded is acquired on a touch screen of the electronic device.

In step 102, it is determined whether a touch control (also referred to as a touch control element) exists in the first area in a currently displayed picture of the touch screen.

In step 103, the touch control is moved to a second area on the touch screen, in response to determining that the touch control exists in the first area. The second area on the touch screen is not shielded.

It is to be noted that the method for touch operation is applied to any electronic device, which may be a device such as a smart phone, a tablet computer, a desktop computer or a digital camera.

The electronic device is provided with a touch screen which may perform a corresponding instruction when detecting a touch operation on the touch screen.

In the embodiments of the disclosure not covered by the claimed invention, the touch screen at least includes a full screen or a curved screen.

The first area refers to an area which has an impact on a user operation and is to be shielded.

For example, during the usage of the mobile phone, since the size of the touch screen of the mobile phone becomes larger, there are often problems with the one hand operation. The touch control for commending in Moments is on the right side of the touch screen, which makes it inconvenient to operate when the user holds the mobile phone with the left hand. For another example, the barrage switch of video websites is often on the left side of the touch screen, which makes it difficult to operate when the user holds the mobile phone with the right hand. For still another example, if the size of the touch screen is too large, the touch control displayed on the middle part of the touch screen is inconvenient to touch by one hand.

In conjunction with the parts which have impacts on the user operations when the user uses the electronic device, the first area is an area on the touch screen of which a distance from an edge is within a predetermined range, and typically is a partial area or an entire area at the edge of the touch screen. For example, FIG. 2 is a schematic diagram showing a position of a first area according to an exemplary embodiment. As shown in FIG. 2, a rectangular area 201 on the right side of the touch screen is a first area. In other embodiments not covered by the claimed invention, the first area may be alternatively a central area of the touch screen, such as a rectangular or circular area in the middle of the touch screen. Here, when the screen size of the touch screen is too large, the control elements displayed on the middle part of the touch screen are inconvenient to touch. The area may be shielded directly, and the touch control in the middle part is moved to other areas to implement the operation of the touch control.

It is to be noted that, there may be more misplaced touches on one of the left and right sides of the touch screen when the user uses the device with one hand. Therefore, in order to reduce the processing cost caused by area shielding, merely an area for an accessory on one of the left and right sides of the touch screen may be shielded. Of course, in order to minimize the misplaced touches, the areas for accessories on both the left and right sides of the touch screen may be shielded, and the disclosure does not limit the position of the first area to be shielded.

Regarding how to determine the first area specifically, the embodiments of the disclosure provide several implementations as follows.

The first area is determined in this way: based on a detected size of the touch screen, when the size of the touch screen is greater than a preset size threshold, an area of which a distance from at least one edge of the touch screen is less than a third preset distance is determined to be the first area to be shielded. That is, the first area is directly determined from an area prone to a misplaced touch based on an area where a misplaced touch may occur when the user touches the screen. Here, the area prone to the misplaced touch is an area near the edge when the size of the touch screen is large.

In an embodiment not covered by the claimed invention, the first area may be alternatively determined in this way: the first area to be shielded on the touch screen of the electronic device is acquired based on the holding parameter when the electronic device is held. As such, assuming that the detected holding parameter indicates that the user holds the electronic device with the left hand currently, a touch control in an area on the right side of the touch screen may be inconvenient to operate. The area may be shielded, and a touch control in the area may be moved.

In an embodiment not covered by the claimed invention, the first area may be alternatively determined in this way: firstly, the areas of which the distances from multiple edges are less than a third preset distance are determined as candidate areas based on the size of the touch screen; and the first area is determined from the candidate areas in combination with the holding parameter when the electronic device is held. That is, the areas near multiple edges are determined to be the candidate areas based on the size of the touch screen, and further according to the holding parameter, such as the holding parameter representing that the user holds the device with the left hand and the right side of the touch screen is inconvenient to operate, and an area on the right side of the touch screen is determined from the candidate areas to be the first area.

The touch control refers to a control that causes a response under a touch operation. The control refers to the encapsulation of data and methods. Then, the touch control may process the target data with a target method under the detected touch operation so as to complete the corresponding function. For example, the touch control may be a button control, a text box control, a (picture or file) upload control or a drop list control, etc.

It is to be noted that after the first area is shielded, the touch operation on the first area cannot trigger the execution of a corresponding instruction. Further, even if there is a touch operation on the touch control in the first area, the corresponding data processing would not occur. In order to solve the problem, when it is determined that there is a touch control in the shielded first area, the touch control is moved to a second area that is not shielded, thereby inhibiting the invalidation of the touch control caused by the shielding of the original first area.

The second area refers to any area on the touch screen except the shielded first area.

In one embodiment, the second area is an adjacent area of the first area. Alternatively, the second area may be an area to which the touch control is moved a little from the original position, as long as the touch control is moved out of the first area.

In another embodiment, the second area is an area spaced apart from the first area. Exemplarily, the second area may be an area on the touch screen which is opposite to the first area, or an area on the touch screen of which an interval distance from the first area exceeds a preset distance. For example, when the first area is a rectangular area on the right side of the touch screen, the second area may be a middle area of the touch screen or an area on the left side of the touch screen.

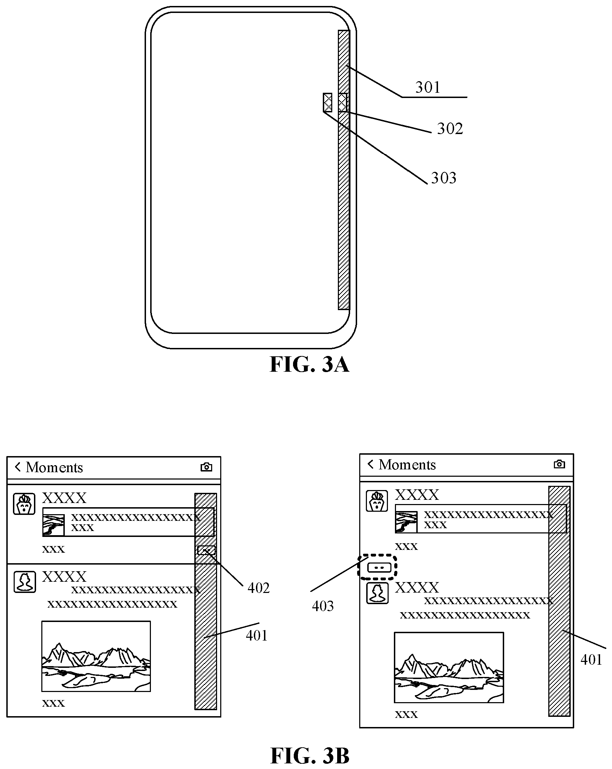

FIG. 3 shows two comparisons between the positions of first and second areas. In FIG. 3, the first areas are rectangular areas on the right side of the touch screen. In FIG. 3A, the second area 303 shown is an area adjacent to a first area 301, i.e., an area obtained by moving a touch control 302 a little from the original position and out of the first area 301. In FIG. 3B, a second area 403 shown is an area opposite to a first area 401, and the second area 403 and the first area 401 are on the left and right sides of the touch screen, respectively. The left figure in FIG. 3B shows a position of a touch control 402 before moving, i.e., on the right side of the touch screen. The right figure in FIG. 3B shows a position of the touch control 402 after moving, i.e., on the left side of the touch screen.

Here, moving the touch control to the second area on the touch screen includes: an icon of the touch control and a function corresponding to the touch control are moved to the second area on the touch screen.

Since different touch controls correspond to different functions, the movement in the embodiments of the disclosure not only allows the user to see the change in positions of the touch control, but also allows a corresponding response when the touch control is touched again after the position changes. For example, after a heart-shaped button for commending in Moments is moved from the right side of the touch screen to the left side of the touch screen, the function of commending may be still achieved when the heart-shaped button is touched again.

Here, in order to support this function, before the method for touch operation in the embodiments of the disclosure is performed, the authorization to a corresponding application may be firstly acquired, and the layout of an interface of the authorized application is moved. Specifically, after obtaining the authorization, a layout code may be changed to adjust the position of a touch control in the application interface.

It is to be noted that since the layout movement is only about the movement of the layout on a User Interface (UI) and does not involve functional changes, the scope of corresponding authorization will not be very large, and the layout movement may be supported by most applications.

As such, according to the method for touch operation provided by the embodiments of the disclosure, the touch control is moved from the first area which is shielded to the second area which is not shielded, and therefore, the touch control may be used continuously without invalidation. Moreover, when it is inconvenient to touch some touch controls due to the positions thereof, the forgoing method of moving the touch control provides a solution, such that the user experience of using the electronic device is improved.

In some embodiments, in step 103, moving the touch control to a second area on the touch screen includes step 1031.

In step 1031, a second area to which the touch control is to be moved is determined according to a position parameter of the touch control, and the touch control is moved to the second area.

As described above, the position of the touch control may be moved to any area on the touch screen except the first area. For example, the position of the touch control may be moved according to a principle of proximity movement (i.e., the touch control is moved a little from the original position, as long as the touch control is moved out of the first area), to an opposite position, or to a middle area of the touch screen.

In that way, the position movement may be performed directly based on a position parameter of the touch control. After acquiring the position parameter of the touch control to be adjusted, the second area to which the touch control is to be moved may be determined according to the position of the first area.

As such, determining the second area to which the touch control is to be moved according to the position parameter of the touch control may specifically include: determining the second area to which the touch control is to be moved according to the position parameter of the touch control and the position parameter of the first area.

Here, the position parameter of the touch control may be determined based on a layout parameter of the touch control during the page layout. The position parameter of the first area may be acquired in combination with a size parameter of the touch screen after the first area is specified.

The position parameter of the first area includes a length parameter and a width parameter. The length parameter refers to the length of a side parallel to a long side of the touch screen, and the width parameter refers to the length of a side parallel to a short side of the touch screen.

This method may select a specific position of the second area according to the needs of the current user on the basis of valid functions of the touch control, and is more flexible in implementation.

In some embodiments, in step 1031, determining the second area to which the touch control is to be moved according to the position parameter of the touch control includes:
determining a touch position on the touch screen corresponding to the touch control according to the position parameter of the touch control; and
determining an area outside the first area, of which a distance from the touch position is less than a first preset distance, to be the second area.

Here, the position parameter of the touch control may be determined based on a layout parameter of the touch control during the page layout. Therefore, after the position parameter of the touch control is determined according to the layout parameter, a touch position on the touch screen corresponding to the touch control may be further determined in combination with the size parameter of the touch screen.

For example, assuming that the layout parameter of the touch control indicates a location in the center of the UI, a specific touch position of the touch control on the touch screen may be determined in combination with the size parameter (for example, a length of 16 cm and a width of 13 cm) of the touch screen.

Here, the area outside the first area of which the distance from the touch position is less than the first preset distance is a second area determined based on the principle of proximity movement, as shown in FIG. 3A.

Due to the second area determined according to the principle of proximity movement, the touch control would not become invalid, and it is more convenient to implement the movement. For example, there is no need to compile different programs to support the movements in different application scenarios. Once the first preset distance is determined, a single program suffices for most movements.

Since the touch control has to move out of the first area, the distance moved is greater than the width parameter of the first area. On this basis, the principle of proximity is further satisfied, and thus the distance moved is less than the first preset distance.

In the embodiments of the disclosure, the first preset distance may be selected autonomously based on the size of the touch screen. For example, the first preset distance may be a distance greater than 0 and less than 1 cm.

In some embodiments, in step 103, moving the touch control to the second area on the touch screen includes:
determining the second area to which the touch control is to be moved according to the position parameter of the touch control and a holding parameter when the electronic device is held, to obtain a determined result; and
moving the touch control to the second area on the touch screen according to the determined result.

Here, as described above, in consideration of the user experience, the second area may be determined through combining the holding parameter when the electronic device is held and the position parameter of the touch control.

The holding parameter is configured to represent whether the user holds the electronic device with the left hand or the right hand currently.

Assuming that the detected holding parameter indicates that the user holds the electronic device with the right hand currently, a touch control in an area on the left side of the touch screen may be inconvenient to operate, and thus the area on the left side of the touch screen may be shielded, and the touch control in the area on the left side of the touch screen may be further moved.

For example, when the position parameter indicates that the touch control is on the left side of the touch screen, and when the user holds the electronic device with the right hand at the moment, the area on the right side of the touch screen is an area convenient for the user to touch, and the area on the right side of the touch screen may be determined to be the second area. That is, the touch control on the left side of the touch screen is moved to the right side which is easy to be touched.

In one embodiment, the second area may be a blank area on the touch screen before the touch control in the first area moves. In this way, after the touch control in the first area moves to the second area, the touch control originally in the second area will not be covered. As such, the movement of the touch control does not affect the usage of the original touch control in the currently displayed picture.

The determined result includes: the second area and a control instruction for moving the touch control to the second area. The touch control may be moved to the second area based on the determined result.

In this way, the second area determined based on the position parameter of the touch control and the holding parameter is more in line with user habits, and the user experience is better.

The holding parameter when the electronic device is held may be determined based on data collected by a detector on the electronic device.

For example, since the palm (or finger) is in different orientations behind the electronic device when the electronic device is held with the left hand or the right hand, the touch on each position may be detected based on the detector on the back of the electronic device to obtain the holding parameter.

For another example, when the electronic device is held with the left hand or the right hand, the number of fingers touching the left edge or right edge of the electronic device is different. It may be alternatively determined whether the electronic device is currently held with the left hand or the right hand based on data collected by the detector near the edges.

In some embodiments, determining the second area to which the touch control is to be moved according to the position parameter of the touch control and the holding parameter when the electronic device is held includes:
determining a touch position on the touch screen corresponding to the touch control according to the position parameter of the touch control;
determining, according to the holding parameter, a first edge on the touch screen which is closest to the touch control to be moved, and determining a second edge opposite to the first edge; and
determining an area outside the first area to be the second area, where a distance between the area outside the first area and the touch position is less than a second present distance.

Here, the touch position on the touch screen corresponding to the touch control is determined in the way described above, which is not repeated herein.

Here, when the first area is an area of which a distance from at least one edge of the touch screen is less than a third preset distance, and it is determined that the touch position of the touch control is a position on the left side of the touch screen, the first edge closest to the touch control to be moved is an edge on the left side of the touch screen, and the second edge is an edge on the right side of the touch screen. Thus, in consideration of the operational problem when the user holds the electronic device with one hand, the touch control may be moved from the left side of the touch screen to the right side of the touch screen, and specifically, to an area on the right side of the touch screen outside the first area (an area near the edge of the touch screen), such as a certain area on the right side of the touch screen of which a distance from the right edge is less than the second preset distance.

When the first area is a central area of the touch screen, and it is determined that the touch position of the touch control is a position on the left side of the touch screen, the first edge closest to the touch control to be moved is an edge on the left side of the touch screen, and the second edge is an edge on the right side of the touch screen. Then, in consideration of the operational problem when the user holds the electronic device with one hand, the touch control may be moved from the left side of the touch screen to the right side of the touch screen, and specifically, to an area on the right side of the touch screen outside the first area (the central area).

In this way, the second area determined in combination with the holding parameter is more in line with user habits, and the user experience is better.

In some embodiments, acquiring the first area to be shielded on the touch screen of the electronic device includes:
detecting a size of the touch screen;
determining, when the size of the touch screen is greater than a preset size threshold, an area, of which a distance from at least one edge of the touch screen less than a third preset distance, to be the first area to be shielded, so as to obtain an adjusted determined result; and
acquiring the first area to be shielded on the touch screen of the electronic device according to the adjusted determined result.

As described above, when the size of the touch screen is too large, there are many problems with the one hand operation. In this case, shielding the area near the edge may reduce the risk of misplaced touches.

Determining the first area based on the detected size of the touch screen is to directly determine the first area from an area prone to a misplaced touch based on an area where a misplaced touch may occur when the user touches the screen.

Here, the area prone to a misplaced touch is an area near the edge when the size of the touch screen is large.

In some embodiments not covered by the claimed invention, acquiring the first area to be shielded on the touch screen of the electronic device includes:
acquiring the first area to be shielded on the touch screen of the electronic device based on the holding parameter when the electronic device is held.

When it is inconvenient for the user to operate, part of the area may be shielded, and the touch control in the part of the area may be moved to the second area, thereby reducing misplaced touches and facilitating user operations.

For example, assuming that the detected holding parameter indicates that the user holds the electronic device with the left hand currently, the touch control in the area on the right side of the touch screen may be inconvenient to operate. The area may be shielded, and the touch control in the area may be moved.

In some embodiments not covered by the claimed invention, acquiring the first area to be shielded on the touch screen of the electronic device includes:
acquiring the first area to be shielded on the touch screen of the electronic device upon detection of a touch movement instruction; wherein the touch movement instruction is configured to indicate a movement to a touch area of the touch control.

Here, the first area may be shielded after receiving the corresponding touch movement instruction. That is, after the touch movement instruction is detected, the method for touch operation of the disclosure is performed.

The touch movement instruction is specifically used to enable the shielding of the first area and enable the position movement authorization to the touch control in the first area.

Here, although there is a risk that the misplaced touch may occur at the position near the edge of the full screen, the full screen may create a better experience when watching videos due to a large visible range of the touch screen. In this case, it is unnecessary to shield the first area prone to the misplaced touch, otherwise the user experience would be poor. For example, the electronic device may be placed at a preset position to play a video, and the first area does not have to be shielded because there is little finger contact and the chance of misplaced touches is small.

As such, through configuring an open or close program for the touch movement in the electronic device, it may realize an option more in line with user requirements, and a more flexible usage.

The disclosure also provides the following embodiments.

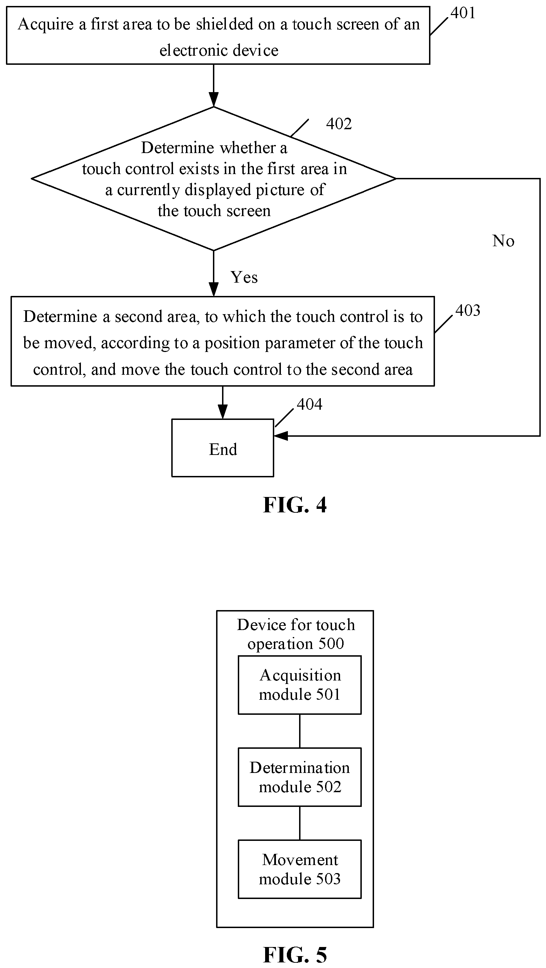

FIG. 4 is a second flowchart showing a method for touch operation according to an exemplary embodiment. As shown in FIG. 4, the method for touch operation includes steps 401 to 404.

In step 401, a first area to be shielded on a touch screen of an electronic device is acquired.

Here, the first area may be determined according to usage requirements, and then the first area may be stored in the electronic device in advance.

For example, the first area may be an area on the touch screen of which a distance from at least one edge is within a preset range. Alternatively, the first area may be a central area of the touch screen.

In step 402, it is determined whether a touch control exists in the first area in a currently displayed picture of the touch screen.

Here, the currently displayed picture may be detected in real time to determine whether a touch control exists in the first area.

When it is determined that there is a touch control exists in the first area, the process proceeds to step 403.

When it is determined that there is no touch control in the first area, the process proceeds to step 404.

In step 403, a second area to which the touch control is to be moved is determined according to a position parameter of the touch control, and the touch control is moved to the second area.

Here, the second area refers to any area on the touch screen except the shielded first area. For example, when the first area is a rectangular area on the right side of the touch screen, the second area may be a middle area of the touch screen or an area on the left side of the touch screen. Alternatively, the second area may be an area to which the touch control is moved a little from the original position, as long as the touch control is moved out of the first area.

In step 404, the process is ended.

When there is no touch control in the first area, the movement is not required.

As such, according to the method for touch operation provided by the embodiment of the disclosure, after a first area to be shielded on a touch screen of an electronic device is acquired, when it is determined that there is a touch control in a first area in a currently displayed picture, the touch control in the first area is moved to a second area that is not shielded. In this way, the touch control is moved from the first area which is shielded to the second area which is not shielded, and therefore, the touch control remains in use without becoming invalid. Moreover, the above method of moving the touch control provides a solution for inconvenient touch of some touch controls due to their positions, such that the user experience of using the electronic device is improved.

FIG. 5 is a structural diagram showing a device for touch operation according to an exemplary embodiment. As shown in FIG. 5, the device for touch operation 500 includes an acquisition module 501, a determination module 502, and a movement module 503.

The acquisition module 501 is configured to acquire a first area to be shielded on a touch screen of an electronic device.

The determination module 502 is configured to determine whether a touch control exists in the first area in a currently displayed picture of the touch screen.

The movement module 503 is configured to move the touch control to a second area on the touch screen, in response to determining that the touch control exists in the first area, where the second area on the touch screen is not shielded.

The device for touch operation is applied to any electronic device equipped with a touch screen.

In some embodiments, the movement module includes a first-type area determination module.

The first-type area determination module is configured to determine a second area to which the touch control is to be moved according to a position parameter of the touch control, and move the touch control to the second area.

In some embodiments, the first-type area determination module includes a first-type position determination module and a first-type area determination submodule.

The first-type position determination module is configured to determine a touch position on the touch screen corresponding to the touch control according to the position parameter of the touch control.

The first-type area determination submodule is configured to determine an area outside the first area to be the second area, where a distance between the area outside the first area and the touch position is less than a first present distance.

In some embodiments, the movement module includes a second-type area determination module and a movement processing module.

The second-type area determination module is configured to determine the second area to which the touch control is to be moved according to a position parameter of the touch control and a holding parameter when the electronic device is held, to obtain a determined result.

The movement processing module is configured to move the touch control to the second area on the touch screen that is not shielded according to the determined result. Here, the second area is an area on the touch screen for displaying the moved touch control.

In some embodiments, the second-type area determination module includes a second-type position determination module and a second-type area determination submodule.

The second-type position determination module is configured to determine a touch position on the touch screen corresponding to the touch control according to the position parameter of the touch control.

The second-type area determination submodule is configured to determine, according to the holding parameter, a first edge on the touch screen which is closest to the touch control to be moved, and determining a second edge opposite to the first edge, and determine an area outside the first area to be a second area, where a distance between the area outside the first area and the second edge is less than a second preset distance.

In some embodiments not covered by the claimed invention, the acquisition module is further configured to:
acquire the first area to be shielded on the touch screen of the electronic device based on the holding parameter when the electronic device is held.

In some embodiments, the acquisition module includes a detection module, and a determination result module.

The detection module is configured to detect the size of the touch screen.

The determination result module is configured to determine, when the size of the touch screen is greater than a preset size threshold, an area to be the first area to be shielded, so as to obtain an adjusted determined result, where a distance between the area to be the first area to be shielded and at least one edge of the touch screen is less than a third preset distance, and
acquire the first area to be shielded on the touch screen of the electronic device according to the adjusted determined result.

In some embodiments not covered by the claimed invention, the acquisition module is further configured to:
acquire the first area to be shielded on the touch screen of the electronic device upon detection of a touch movement instruction. Here, the touch movement instruction is configured to indicate a movement to a touch area of the touch control.

Regarding the device in the above-mentioned embodiment, the specific manner in which each module performs the operations has been described in detail in the method embodiments, and the details are omitted herein.

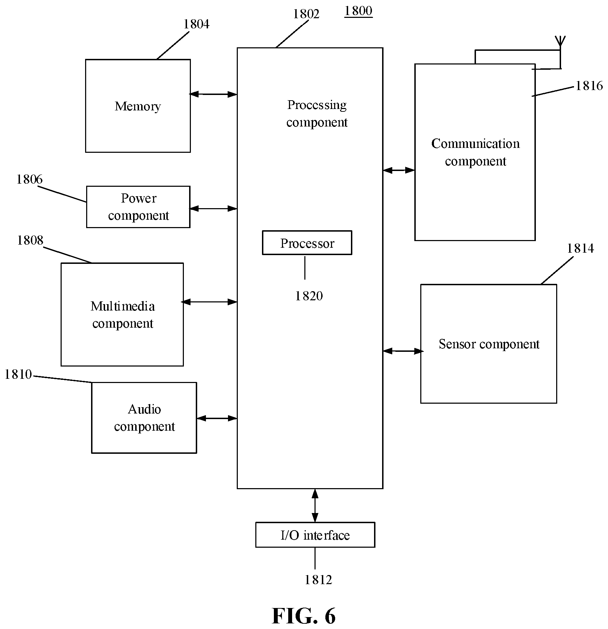

FIG. 6 is a block diagram showing a device 1800 for a touch operation according to an exemplary embodiment not covered by the claimed invention. For example, the device 1800 may be a mobile phone, a computer, a digital broadcast terminal, a messaging device, a game console, a tablet, a medical device, exercise equipment, a personal digital assistant, or the like.

Referring to FIG. 6, the device 1800 may include one or more of the following components: a processing component 1802, a memory 1804, a power component 1806, a multimedia component 1808, an audio component 1810, an Input/Output (I/O) interface 1812, a sensor component 1814, and a communication component 1816.

The processing component 1802 typically controls overall operations of the device 1800, such as operations associated with display, telephone calls, data communications, camera operations, and recording operations. The processing component 1802 may include one or more processors 1820 for executing instructions to complete all or part of the steps of the described methods. In addition, the processing component 1802 may further include one or more modules to facilitate interactions between the processing component 1802 and other components. For example, the processing component 1802 may include a multimedia module to facilitate the interaction between the multimedia component 1808 and the processing component 1802.

The memory 1804 is configured to store various types of data to support the operation of the device 1800. Examples of such data include instructions, contact data, phonebook data, messages, images, video, or the like for any applications or methods operated on the device 1800. The memory 1804 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk or an optical disk.

The power component 1806 provides power to various components of the device 1800. The power component 1806 may include a power management system, one or more power sources, and other components associated with the generation, management and distribution of power for the device 1800.

The multimedia component 1808 includes a screen providing an output interface between the device 1800 and the user. In some embodiments not covered by the claimed invention, the screen may include a liquid crystal display (LCD) and a touch panel (TP). When the screen includes the TP, the screen may be implemented as a touch screen to receive the input signal from the user. The TP includes one or more touch sensors to sense touches, slides and gestures on the TP. The touch sensors may not only sense a boundary of a touch or a slide, but also sense a duration and a pressure associated with the touch or slide. In some embodiments not covered by the claimed invention, the multimedia component 1808 includes a front camera and/or a rear camera. The front camera and/or the rear camera may receive external multimedia data while the device 1800 is in an operation mode, such as a shooting mode or a video mode. Each of the front camera and/or the rear camera may be a fixed optical lens system or have a focus and an optical zoom capability.

The audio component 1810 is configured to output and/or input an audio signal. For example, the audio component 1810 includes a microphone (MIC) configured to receive an external audio signal when the device 1800 is in an operation mode, such as a call mode, a recording mode, and a voice recognition mode. The received audio signal may be further stored in the memory 1804 or transmitted via the communication component 1816. In some embodiments not covered by the claimed invention, the audio component 1810 further includes a speaker for outputting the audio signal.

The I/O interface 1812 provides an interface between the processing component 1802 and a peripheral interface module, such as a keyboard, a click wheel, or buttons. The buttons may include, but are not limited to, a home button, a volume button, a start button, and a lock button.

The sensor component 1814 includes one or more sensors to provide state assessments for various aspects of the device 1800. For example, the sensor component 1814 may detect an on/off state of the device 1800, and relative positioning of components. For example, the component is the display and the keypad of the device 1800. The sensor component 1814 may further detect a change in position of the device 1800 or of a component of the device 1800, the presence or absence of contact between the user and the device 1800, an orientation or an acceleration/deceleration of the device 1800, or a change in temperature of the device 1800. The sensor component 1814 may include a proximity sensor configured to detect the presence of nearby objects without any physical contact. The sensor component 1814 may further include a light sensor, such as a complementary metal oxide semiconductor (CMOS) or a charge coupled device (CCD) image sensor, for use in imaging applications. In some embodiments not covered by the claimed invention, the sensor component 1814 may further include an acceleration sensor, a gyroscope sensor, a magnetic sensor, a pressure sensor, or a temperature sensor.

The communication component 1816 is configured to facilitate the wired or wireless communication between the device 1800 and other devices. The device 1800 may access a wireless network based on a communication standard, such as WiFi, 2G or 3G, or a combination thereof. In one exemplary embodiment not covered by the claimed invention, the communication component 1816 receives a broadcast signal or broadcast associated information from an external broadcast management system via a broadcast channel. In one exemplary embodiment not covered by the claimed invention, the communication component 1816 further includes a near field communication (NFC) module to facilitate short-range communications. For example, the NFC module may be implemented based on a radio frequency identification (RFID) technology, an infrared data association (IrDA) technology, an ultra-wideband (UWB) technology, a bluetooth (BT) technology, or other technologies.

In an exemplary embodiment not covered by the claimed invention, the device 1800 may be implemented with one or more application specific integrated circuit (ASIC), digital signal processor (DSP), digital signal processing device (DSPD), programmable logic device (PLD), field programmable gate array (FPGA), controller, micro-controller, microprocessor, or other electronic elements, for performing the above-described methods.

An exemplary embodiment further provides a non-transitory computer-readable storage medium including instructions, such as the memory 1804 including instructions executable by the processor 1820 of the device 1800 to complete the above-mentioned methods. For example, the non-transitory computer-readable storage medium may be a ROM, a random access memory (RAM), a compact disc read-only memory (CD-ROM), a magnetic tape, a floppy disc, an optical data storage device and the like.

A non-transitory computer-readable storage medium is provided. When instructions in the storage medium are executed by a processor, the method in the above-mentioned embodiments may be performed.

Other embodiments of the disclosure will be apparent to those skilled in the art after the specification is considered and the disclosure here is put into practice. The disclosure is intended to cover any variations, usages, or adaptations of the disclosure following the general principles thereof and including the common knowledge in the art or common technical measures in the art undisclosed here. It is intended that the specification and embodiments be considered exemplary merely, and a true scope of the disclosure is indicated by the following claims.

It is to be understood that the disclosure is not limited to the exact structures described above and illustrated in the accompanying drawings, and various modifications and changes may be made without departing from the scope thereof. It is intended that the scope of the disclosure only be limited by the appended claims.

## Claims

1. A method for a touch operation, performed by an electronic device, the method comprising:
detecting a size of a touch screen of the electronic device;
determining, based on the size of the touch screen, areas of which distances from multiple edges of the touch screen are less than a first preset distance as candidate areas;
determining from the candidate areas, based on the size of the touch screen and a holding parameter, a first area to be shielded, the holding parameter representing whether a user is holding the electronic device with a left hand or a right hand;
acquiring the first area to be shielded on the touch screen of the electronic device;
determining (102) whether a touch control exists in the first area in a currently displayed picture of the touch screen; and
moving (103) the touch control to a second area on the touch screen, in response to determining that the touch control exists in the first area, wherein the second area on the touch screen is not shielded.

2. The method according to claim 1, wherein moving (103) the touch control to the second area on the touch screen comprises:
determining the second area, to which the touch control is to be moved, according to a position parameter of the touch control, and
moving the touch control to the second area.

3. The method according to claim 2, wherein determining the second area, to which the touch control is to be moved, according to the position parameter of the touch control comprises:
determining a touch position on the touch screen corresponding to the touch control according to the position parameter of the touch control; and
determining an area outside the first area to be the second area, wherein a distance between the area outside the first area and the touch position is less than a second preset distance.

4. The method according to any of claims 1 to 3, wherein moving (103) the touch control to the second area on the touch screen comprises:
determining the second area, to which the touch control is to be moved, according to a position parameter of the touch control and the holding parameter when the electronic device is held, to obtain a second determined result; and
moving the touch control to the second area on the touch screen according to the second determined result, wherein the second area on the touch screen is not shielded.

5. The method according to claim 4, wherein determining the second area, to which the touch control is to be moved, according to the position parameter of the touch control and the holding parameter when the electronic device is held comprises:
determining a touch position on the touch screen corresponding to the touch control according to the position parameter of the touch control;
determining, according to the holding parameter, a first edge on the touch screen, and determining a second edge opposite to the first edge, wherein the first edge on the touch screen is closest to the touch control to be moved; and
determining an area outside the first area to be the second area, wherein a distance between the area outside the first area and the second edge is less than a third preset distance.

6. An apparatus (500) for touch operation, applied to an electronic device, the apparatus comprising an acquisition module (501), a determination module (502) and a movement module (503), wherein
the acquisition module (501) comprises a detection module and a determination result module; the detection module is configured to detect a size of a touch screen of the electronic device, and the determination result module is configured to determine, based on the size of the touch screen, areas of which distances from multiple edges of the touch screen are less than a first preset distance as candidate areas; and determine from the candidate areas, based on the size of the touch screen and a holding parameter, a first area to be shielded, the holding parameter representing whether a user is holding the electronic device with a left hand or a right hand;
the acquisition module (501) is further configured to acquire the first area to be shielded on the touch screen of the electronic device;
the determination module (502) is configured to determine whether a touch control exists in the first area in a currently displayed picture of the touch screen; and
the movement module (503) is configured to move the touch control to a second area on the touch screen, in response to determining that the touch control exists in the first area, wherein the second area on the touch screen is not shielded.

7. The apparatus according to claim 6, wherein the movement module (503) comprises:
a first-type area determination module, configured to determine the second area, to which the touch control is to be moved, according to a position parameter of the touch control, and move the touch control to the second area.

8. The apparatus according to claim 7, wherein the first-type area determination module comprises:
a first-type position determination module, configured to determine a touch position on the touch screen corresponding to the touch control according to the position parameter of the touch control; and
a first-type area determination submodule, configured to determine an area outside the first area to be the second area, wherein a distance between the area outside the first area and the touch position is less than a second preset distance.

9. The apparatus according to any of claims 6 to 8, wherein the movement module (503) comprises:
a second-type area determination module, configured to determine the second area, to which the touch control is to be moved, according to a position parameter of the touch control and the holding parameter when the electronic device is held, so as to obtain a second determined result; and
a movement processing module, configured to move the touch control to the second area on the touch screen according to the second determined result, wherein the second area on the touch screen is not shielded.

10. The apparatus according to claim 9, wherein the second-type area determination module comprises:
a second-type position determination module, configured to determine a touch position on the touch screen corresponding to the touch control according to the position parameter of the touch control; and
a second-type area determination submodule, configured to determine, according to the holding parameter, a first edge on the touch screen which is closest to the touch control to be moved, and determine a second edge opposite to the first edge, and determine an area outside the first area to be the second area, wherein a distance between the area outside the first area and the second edge is less than a third preset distance.

11. A computer-readable storage medium having stored thereon computer-executable instructions, which, when executed by a processor, implement the steps of the method provided in any one of claims 1 to 5.

## Patentansprüche

1. Verfahren zum Durchführen einer Touch-Bedienung, das von einer elektronischen Vorrichtung durchgeführt wird, wobei das Verfahren umfasst:
Detektieren einer Größe eines Touchscreens der elektronischen Vorrichtung;
Bestimmen, basierend auf der Größe des Touchscreens, von Bereichen, bei denen die Abstände zu mehreren Rändern des Touchscreens kleiner als ein erster voreingestellter Abstand sind, als Kandidatenbereiche;
Bestimmen, basierend auf der Größe des Touchscreens und einem Halteparameter, eines ersten abzuschirmenden Bereichs aus den Kandidatenbereichen, wobei der Halteparameter angibt, ob ein Benutzer die elektronische Vorrichtung mit der linken Hand oder der rechten Hand hält;
Erfassen des ersten Bereichs, der auf dem Touchscreen der elektronischen Vorrichtung abgeschirmt werden soll;
Feststellen (102), ob im ersten Bereich eines aktuell angezeigten Bildes auf dem Touchscreen eine Touch-Steuerung vorliegt; und
Bewegen (103) der Touch-Steuerung in einen zweiten Bereich auf dem Touchscreen, und zwar als Reaktion auf die Feststellung, dass sich die Touch-Steuerung im ersten Bereich befindet, wobei der zweite Bereich auf dem Touchscreen nicht abgeschirmt ist.

2. Verfahren nach Anspruch 1, wobei das Bewegen (103) der Touch-Steuerung in den zweiten Bereich auf dem Touchscreen umfasst:
Bestimmen des zweiten Bereichs, in den die Touch-Steuerung bewegt werden soll, anhand eines Positionsparameters der Touch-Steuerung, und
Bewegen der Touch-Steuerung in den zweiten Bereich.

3. Verfahren nach Anspruch 2, wobei das Bestimmen des zweiten Bereichs, in den die Touch-Steuerung bewegt werden soll, anhand des Positionsparameters der Touch-Steuerung umfasst:
Bestimmen einer Touch-Position auf dem Touchscreen, die der Touch-Steuerung entspricht, anhand des Positionsparameters der Touch-Steuerung; und
Bestimmen eines Bereichs außerhalb des ersten Bereichs als zweiten Bereich, wobei ein Abstand zwischen dem Bereich außerhalb des ersten Bereichs und der Touch-Position kleiner ist als ein zweiter voreingestellter Abstand.

4. Verfahren nach einem der Ansprüche 1 bis 3, wobei das Bewegen (103) der Touch-Steuerung in den zweiten Bereich auf dem Touchscreen umfasst:
Bestimmen des zweiten Bereichs, in den die Touch-Steuerung bewegt werden soll, anhand eines Positionsparameters der Touch-Steuerung und des Halteparameters, wenn die elektronische Vorrichtung gehalten wird, um ein zweites ermitteltes Ergebnis zu erhalten; und
Bewegen der Touch-Steuerung in den zweiten Bereich auf dem Touchscreen entsprechend dem zweiten ermittelten Ergebnis, wobei der zweite Bereich auf dem Touchscreen nicht abgeschirmt ist.

5. Verfahren nach Anspruch 4, wobei das Bestimmen des zweiten Bereichs, in den die Touch-Steuerung bewegt werden soll, anhand des Positionsparameters der Touch-Steuerung und des Halteparameters, wenn die elektronische Vorrichtung gehalten wird, umfasst:
Bestimmen einer Touch-Position auf dem Touchscreen, die der Touch-Steuerung entspricht, anhand des Positionsparameters der Touch-Steuerung;
Bestimmen, entsprechend dem Halteparameter, eines ersten Randes auf dem Touchscreen, und Bestimmen eines zweiten Randes, welcher entgegengesetzt zu dem ersten Rand ist, wobei der erste Rand auf dem Touchscreen der zu bewegenden Touch-Steuerung am nächsten liegt; und
Bestimmen eines Bereichs außerhalb des ersten Bereichs als zweiten Bereich, wobei ein Abstand zwischen dem Bereich außerhalb des ersten Bereichs und dem zweiten Rand kleiner ist als ein dritter voreingestellter Abstand.

6. Vorrichtung (500) zur Touch-Bedienung, die in einer elektronischen Vorrichtung zum Einsatz kommt, wobei die Vorrichtung ein Erfassungsmodul (501), ein Bestimmungsmodul (502) und ein Bewegungsmodul (503) aufweist, wobei
das Erfassungsmodul (501) ein Detektionsmodul und ein Bestimmungsergebnismodul aufweist; wobei das Detektionsmodul dazu ausgebildet ist, eine Größe eines Touchscreens der elektronischen Vorrichtung zu detektieren, und das Bestimmungsergebnismodul dazu ausgebildet ist, basierend auf der Größe des Touchscreens Bereiche, bei denen die Abstände zu mehreren Rändern des Touchscreens kleiner als ein erster voreingestellter Abstand sind, als Kandidatenbereiche zu bestimmen; und Bestimmen, basierend auf der Größe des Touchscreens und einem Halteparameter, eines ersten abzuschirmenden Bereichs aus den Kandidatenbereichen, wobei der Halteparameter angibt, ob ein Benutzer die elektronische Vorrichtung mit der linken Hand oder der rechten Hand hält;
das Erfassungsmodul (501) ferner dazu ausgebildet ist, den ersten Bereich, der auf dem Touchscreen der elektronischen Vorrichtung abgeschirmt werden soll, zu erfassen;
das Bestimmungsmodul (502) dazu ausgebildet ist, zu bestimmen, ob im ersten Bereich eines aktuell angezeigten Bildes auf dem Touchscreen eine Touch-Steuerung vorliegt; und
das Bewegungsmodul (503), dazu ausgebildet ist, die Touch-Steuerung in einen zweiten Bereich auf dem Touchscreen zu bewegen, und zwar als Reaktion auf die Feststellung, dass sich die Touch-Steuerung im ersten Bereich befindet, wobei der zweite Bereich auf dem Touchscreen nicht abgeschirmt ist.

7. Vorrichtung nach Anspruch 6, wobei das Bewegungsmodul (503) aufweist:
ein Bereichsbestimmungsmodul vom ersten Typ, das dazu ausgebildet ist, den zweiten Bereich in den die Touch-Steuerung bewegt werden soll, anhand eines Positionsparameters der Touch-Steuerung zu bestimmen und die Touch-Steuerung in den zweiten Bereich zu bewegen.

8. Vorrichtung nach Anspruch 7, wobei das Bereichsbestimmungsmodul vom ersten Typ aufweist:
ein Positionsbestimmungsmodul vom ersten Typ, das dazu ausgebildet ist, eine der Touch-Steuerung entsprechende Touch-Position auf dem Touchscreen anhand des Positionsparameters der Touch-Steuerung zu bestimmen; und
ein Bereichsbestimmungsuntermodul vom ersten Typ, das dazu ausgebildet ist, einen Bereich außerhalb des ersten Bereichs als zweiten Bereich zu bestimmen, wobei ein Abstand zwischen dem Bereich außerhalb des ersten Bereichs und der Touch-Position kleiner ist als ein zweiter voreingestellter Abstand.

9. Vorrichtung nach einem der Ansprüche 6 bis 8, wobei das Bewegungsmodul (503) aufweist:
ein Bereichsbestimmungsmodul vom zweiten Typ, das dazu ausgebildet ist, den zweiten Bereich, in den die Touch-Steuerung bewegt werden soll, anhand eines Positionsparameters der Touch-Steuerung und des Halteparameters, wenn die elektronische Vorrichtung gehalten wird, zu bestimmen, um ein zweites ermitteltes Ergebnis zu erhalten; und
ein Bewegungsverarbeitungsmodul, das dazu ausgebildet ist, die Touch-Steuerung in den zweiten Bereich auf dem Touchscreen entsprechend dem zweiten ermittelten Ergebnis zu bewegen, wobei der zweite Bereich auf dem Touchscreen nicht abgeschirmt ist.

10. Vorrichtung nach Anspruch 9, wobei das Bereichsbestimmungsmodul vom zweiten Typ aufweist:
ein Positionsbestimmungsmodul vom zweiten Typ, das dazu ausgebildet ist, eine der Touch-Steuerung entsprechende Touch-Position auf dem Touchscreen anhand des Positionsparameters der Touch-Steuerung zu bestimmen; und
ein Bereichsbestimmungsuntermodul vom zweiten Typ, das dazu ausgebildet ist, anhand des Halteparameters einen ersten Rand auf dem Touchscreen zu bestimmen, welcher der zu bewegenden Touch-Steuerung am nächsten liegt, und einen dem ersten Rand entgegengesetzten zweiten Rand zu bestimmen, und einen Bereich außerhalb des ersten Bereichs als den zweiten Bereich zu bestimmen, wobei ein Abstand zwischen dem Bereich außerhalb des ersten Bereichs und dem zweiten Rand kleiner ist als ein dritter voreingestellter Abstand.

11. Computerlesbares Speichermedium, auf dem computerausführbare Befehle gespeichert sind, die bei Ausführung durch einen Prozessor die Schritte des Verfahrens nach einem der Ansprüche 1 bis 5 implementieren.

## Revendications

1. Procédé destiné à un fonctionnement tactile, mis en œuvre par un dispositif électronique, le procédé comprenant les étapes consistant à :
détecter une taille d'un écran tactile du dispositif électronique ;
déterminer, sur la base de la taille de l'écran tactile, des zones dont des distances par rapport à de multiples bords de l'écran tactile sont inférieures à une première distance prédéfinie en tant que zones candidates ;
déterminer, à partir des zones candidates, sur la base de la taille de l'écran tactile et d'un paramètre de tenue, une première zone à masquer, le paramètre de tenue représentant la tenue éventuelle, par un utilisateur, du dispositif électronique de la main gauche ou de la main droite ;
acquérir la première zone à masquer sur l'écran tactile du dispositif électronique ;
déterminer (102) si une commande tactile est présente dans la première zone dans une image en cours d'affichage de l'écran tactile ; et
déplacer (103) la commande tactile vers une seconde zone de l'écran tactile, en réponse à la détermination du fait que la commande tactile est présente dans la première zone, dans lequel la seconde zone de l'écran tactile n'est pas masquée.

2. Procédé selon la revendication 1, dans lequel l'étape de déplacement (103) de la commande tactile vers la seconde zone de l'écran tactile consiste à :
déterminer la seconde zone, vers laquelle il convient de déplacer la commande tactile, conformément à un paramètre de position de la commande tactile, et
déplacer la commande tactile vers la seconde zone.

3. Procédé selon la revendication 2, dans lequel la détermination de la seconde zone, vers laquelle il convient de déplacer la commande tactile, conformément au paramètre de position de la commande tactile, consiste à :
déterminer une position de toucher sur l'écran tactile correspondant à la commande tactile conformément au paramètre de position de la commande tactile ; et
déterminer une zone à l'extérieur de la première zone pour qu'elle devienne la seconde zone, dans lequel une distance entre la zone à l'extérieur de la première zone et la position de toucher est inférieure à une deuxième distance prédéfinie.

4. Procédé selon l'une quelconque des revendications 1 à 3, dans lequel l'étape de déplacement (103) de la commande tactile vers la seconde zone sur l'écran tactile consiste à :
déterminer la seconde zone, vers laquelle il convient de déplacer la commande tactile, conformément à un paramètre de position de la commande tactile et au paramètre de tenue lorsque le dispositif électronique est tenu, pour obtenir un second résultat déterminé ; et
déplacer la commande tactile vers la seconde zone sur l'écran tactile conformément au second résultat déterminé, dans lequel la seconde zone de l'écran tactile n'est pas masquée.

5. Procédé selon la revendication 4, dans lequel la détermination de la seconde zone, vers laquelle il convient de déplacer la commande tactile, conformément au paramètre de position de la commande tactile et au paramètre de tenue lorsque le dispositif électronique est tenu, consiste à :
déterminer une position de toucher sur l'écran tactile correspondant à la commande tactile conformément au paramètre de position de la commande tactile ;
déterminer, conformément au paramètre de tenue, un premier bord sur l'écran tactile, et déterminer un second bord opposé au premier bord, dans lequel le premier bord de l'écran tactile est le plus proche de la commande tactile à déplacer ; et
déterminer une zone à l'extérieur de la première zone pour qu'elle devienne la seconde zone, dans lequel une distance entre la zone à l'extérieur de la première zone et le second bord est inférieure à une troisième distance prédéfinie.

6. Appareil (500) destiné à un fonctionnement tactile, appliqué à un dispositif électronique, l'appareil comprenant un module d'acquisition (501), un module de détermination (502) et un module de déplacement (503), dans lequel
le module d'acquisition (501) comprend un module de détection et un module de résultat de détermination ; le module de détection est configuré pour détecter une taille d'un écran tactile du dispositif électronique, et le module de résultat de détermination est configuré pour déterminer, sur la base de la taille de l'écran tactile, des zones dont des distances par rapport à de multiples bords de l'écran tactile sont inférieures à une première distance prédéfinie en tant que zones candidates ; et pour déterminer, à partir des zones candidates, sur la base de la taille de l'écran tactile et d'un paramètre de tenue, une première zone à masquer, le paramètre de tenue représentant la tenue éventuelle, par un utilisateur, du dispositif électronique de la main gauche ou de la main droite ;
le module d'acquisition (501) est en outre configuré pour acquérir la première zone à masquer sur l'écran tactile du dispositif électronique ;
le module de détermination (502) est configuré pour déterminer la présence éventuelle d'une commande tactile dans la première zone dans une image en cours d'affichage de l'écran tactile ; et
le module de déplacement (503) est configuré pour déplacer la commande tactile vers une seconde zone sur l'écran tactile, en réponse à la détermination du fait que la commande tactile est présente dans la première zone, dans lequel la seconde zone de l'écran tactile n'est pas masquée.

7. Appareil selon la revendication 6, dans lequel le module de déplacement (503) comprend :
un module de détermination de zone de premier type, configuré pour déterminer la seconde zone, vers laquelle il convient de déplacer la commande tactile, conformément à un paramètre de position de la commande tactile, et pour déplacer la commande tactile vers la seconde zone.

8. Appareil selon la revendication 7, dans lequel le module de détermination de zone de premier type comprend :
un module de détermination de position de premier type, configuré pour déterminer une position de toucher sur l'écran tactile correspondant à la commande tactile conformément au paramètre de position de la commande tactile ; et
un sous-module de détermination de zone de premier type, configuré pour déterminer une zone à l'extérieur de la première zone pour qu'elle devienne la seconde zone, dans lequel une distance entre la zone à l'extérieur de la première zone et la position de toucher est inférieure à une deuxième distance prédéfinie.

9. Appareil selon l'une quelconque des revendications 6 à 8, dans lequel le module de déplacement (503) comprend :
un module de détermination de zone de second type, configuré pour déterminer la seconde zone, vers laquelle il convient de déplacer la commande tactile, conformément à un paramètre de position de la commande tactile et au paramètre de tenue lorsque le dispositif électronique est tenu, de façon à obtenir un second résultat déterminé ; et
un module de traitement de déplacement, configuré pour déplacer la commande tactile vers la seconde zone sur l'écran tactile conformément au second résultat déterminé, dans lequel la seconde zone de l'écran tactile n'est pas masquée.

10. Appareil selon la revendication 9, dans lequel le module de détermination de zone de second type comprend :
un module de détermination de position de second type, configuré pour déterminer une position de toucher sur l'écran tactile correspondant à la commande tactile conformément au paramètre de position de la commande tactile ; et
un sous-module de détermination de zone de second type, configuré pour déterminer, conformément au paramètre de tenue, un premier bord de l'écran tactile qui est le plus proche de la commande tactile à déplacer, et pour déterminer un second bord opposé au premier bord, ainsi que pour déterminer une zone à l'extérieur de la première zone pour qu'elle devienne la seconde zone, dans lequel une distance entre la zone à l'extérieur de la première zone et le second bord est inférieure à une troisième distance prédéfinie.

11. Support d'enregistrement lisible par ordinateur comportant, mémorisées en son sein, des instructions exécutables par ordinateur qui, lorsqu'elles sont exécutées par un processeur, mettent en œuvre les étapes du procédé selon l'une quelconque des revendications 1 à 5.
